# FASCICULE DE BREVET EUROPEEN

(11) **EP 3 927 617 B1**
(45) Date de publication et mention de la délivrance du brevet: **18.09.2024**
(21) Numéro de dépôt: 20707720.7
(22) Date de dépôt: 31.01.2020
(51) Int. Cl.: B64C 11/06, B64C 11/32, F01D 7/02, F04D 29/32

(54) **PIVOT D'AUBE À ORIENTATION RÉGLABLE ET À ENCOMBREMENT RÉDUIT POUR MOYEU DE SOUFFLANTE DE TURBOMACHINE**
PLATZSPARENDER UND VERSTELLBARER SCHAUFELZAPFEN FÜR TURBOMASCHINEN
SPACE-SAVING AND ADJUSTABLE BLADE PIVOT FOR TURBO MACHINE FAN HUBS

(30) Priorité: 22.02.2019 FR 1901823
(43) Date de publication de la demande: 29.12.2021
(73) Titulaire: SAFRAN AIRCRAFT ENGINES, 75015 Paris (FR)
(72) Inventeur: MILLIER, Vincent, François, Georges, 77550 MOISSY-CRAMAYEL (FR); FRANTZ, Caroline, Marie, 77550 Moissy-Cramayel (FR); CHARIER, Gilles, Alain, Marie, 77550 MOISSY-CRAMAYEL (FR); BELMONTE, Olivier, 77550 MOISSY-CRAMAYEL (FR)
(74) Mandataire: Cabinet Beau de Loménie
(86) Numéro de dépôt international: PCT/FR2020/050164
(87) Numéro de publication internationale: WO 2020/169896

(56) Documents cités:
- EP-A1- 3 078 588
- EP-A1- 3 392 460
- FR-A1- 3 046 403
- FR-A1- 3 046 403
- US-A- 2 499 837
- US-A- 5 015 150

## Description

### Domaine Technique

La présente invention se rapporte au domaine général des turbomachines équipées d'une ou deux soufflante(s) carénée(s) ou non carénée(s), et plus particulièrement à la commande de l'orientation des aubes de soufflante(s) de ces turbomachines.

Un domaine d'application privilégié de l'invention est celui des turboréacteurs comprenant une soufflante à très fort taux de dilution (grand diamètre de soufflante) et à très faible rapport de pression.

### Technique antérieure

L'opérabilité d'un turboréacteur à très fort taux de dilution est assurée en introduisant une variabilité sur le module basse-pression du turboréacteur, cette variabilité étant activée selon les phases de vol pour restaurer une marge au pompage suffisante.

Il est connu d'assurer la variabilité par un système de changement de calage des aubes de la soufflante qui soit intégré au moyeu de la soufflante. Un tel système de changement de calage des aubes permet également d'assurer la fonction d'inversion de poussée qui n'est, avec ce type de turboréacteur, plus réalisée par la nacelle du moteur.

Par ailleurs, dans le module de soufflante d'un turboréacteur à très fort taux de dilution, la rétention radiale des aubes de soufflante est généralement assurée par la forme du pied de pale et de l'alvéole qui la reçoit, par un pivot et ses paliers à roulement pour reprendre l'ensemble des efforts auxquels l'aube est soumise, par le moyeu de la soufflante dans lequel s'intègre l'ensemble des pivots, et par le carter fan.

On pourra par exemple se référer à la publication FR 3,046,403 qui décrit un exemple d'une telle architecture de maintien des aubes de soufflante. Plus précisément, dans cette publication, la rétention radiale de chaque aube se compose d'un pivot comprenant une attache en forme de bulbe, de deux paliers à roulement à billes qui permettent de reprendre les efforts aérodynamiques, inertiels et centrifuges subis par l'aube et son pivot, d'un excentrique relié par des cannelures au pivot, et d'un moyeu intégrant l'ensemble des pivots.

Avec une telle architecture, la dimension du moyeu de la soufflante dépend directement de l'intégration du mécanisme de changement de pas des aubes mais également de la taille des paliers à roulement de chaque pivot.

En effet, dans la configuration décrite dans la publication FR 3,046,403, le palier à roulement intérieur reprend l'intégralité des efforts centrifuges vus par l'aube et son pivot. Pour minimiser les efforts transversaux à reprendre par ce palier, les paliers à roulement intérieur et extérieur sont radialement très espacés l'un de l'autre. Le palier à roulement intérieur est donc non seulement le palier le plus large mais il est également placé sur un rayon très bas du moyeu de sorte que l'espace tangentiel entre les paliers à roulement intérieurs de deux aubes adjacentes est très restreint. Le diamètre du moyeu de la soufflante s'en trouve par conséquent impacté. Le document US5015150A divulgue un dispositif de montage d'une pale de propfan enveloppée et pivotante sur un rotor, dans lequel la pale de propfan est fixée à un porte-pale et ce porte-pale, au moyen d'un roulement à rouleaux, est disposé dans le rotor de manière à pouvoir pivoter de façon réglable autour d'un axe qui est radial par rapport au moteur.

Or, pour optimiser le rendement de la soufflante d'un turboréacteur à très fort taux de dilution, on cherche à minimiser le diamètre du moyeu de la soufflante et/ou à intégrer un nombre d'aubes plus important à même taille de moyeu.

### Exposé de l'invention

La présente invention a donc pour but principal de proposer une architecture des pivots et de leurs paliers à roulement qui soit moins encombrante.

Conformément à l'invention, ce but est atteint grâce à un pivot d'aube à orientation réglable pour moyeu de soufflante de turbomachine, comprenant :
- un plot ayant à une extrémité radiale extérieure des moyens de retenue configurés pour retenir un pied d'aube de soufflante et à une extrémité radiale intérieure des moyens d'accouplement pour la transmission d'un couple de torsion ;
- un palier à roulement à billes de reprise des efforts centrifuges ayant une bague interne montée en appui transversal contre une partie radiale extérieure du plot ;
- un écrou de serrage vissé sur un filetage externe du plot pour assurer un serrage de la bague interne du palier à roulement à billes de reprise des efforts centrifuges sur le plot ;
- un palier à roulement de reprise des efforts transversaux ayant une bague interne montée en appui transversal contre une partie radiale intérieure du plot ;
- une bague de transmission de calage positionnée à l'intérieur de l'extrémité radiale intérieure du plot et munie de moyens d'accouplement coopérant avec les moyens d'accouplement du plot ; et
- des moyens de verrouillage de la bague de transmission de calage sur le plot.

L'invention est remarquable en ce qu'elle propose un palier à roulement à billes ayant quatre points de contact qui est positionné le plus éloigné possible radialement de l'axe moteur pour bénéficier d'un maximum de place et ainsi être dimensionné pour reprendre les efforts centrifuges vus par l'aube et son pivot. Quant aux efforts transversaux, moins importants que les efforts centrifuges, ils sont repris par un palier à roulement à aiguilles ou à rouleaux qui permettent un guidage précis et un gain en compacité.

Il résulte de la compacité des paliers à roulement qu'il est possible de réduire le diamètre du moyeu de la soufflante et/ou, à même diamètre de moyeu, d'intégrer un plus grand nombre d'aubes de soufflante sur celui-ci.

De plus, la plus grande compacité du pivot selon l'invention le rend plus léger que les pivots de l'art antérieur, notamment de celui décrit dans la publication FR 3,046,403, ce qui diminue la masse soumise aux efforts centrifuges.

Le pivot selon l'invention est également plus fiable car les efforts centrifuges vus par l'aube et son pivot sont repris par un écrou et non plus par deux demi-bagues nécessitant une grande précision d'usinage comme décrit dans l'art antérieur.

Enfin, le fait d'intégrer la bague de transmission de calage à l'intérieur de l'extrémité radiale intérieure du plot dégage de la place radialement et tangentiellement, ce qui permet de limiter les contraintes d'intégration sur le système de changement de pas de calage à l'intérieur de l'extrémité radiale intérieure du plot.

Le palier à roulement de reprise des efforts transversaux comprend une bague externe configurée pour être montée en appui transversal à l'intérieur d'un moyeu de soufflante, les bagues interne et externe définissant des pistes de roulement pour une pluralité d'éléments roulants.

De même, le palier à roulement à billes de reprise des efforts centrifuges comprend une bague externe destinée à être montée en appui transversal à l'intérieur d'un moyeu de soufflante, les bagues interne et externe définissant des pistes de roulement pour une pluralité de billes.

Dans ce cas, le pivot peut comprendre en outre un second écrou de serrage configuré pour être vissé sur un filetage interne du moyeu pour assurer un serrage contre celui-ci des bagues externes respectives du palier à roulement à billes de reprise des efforts centrifuges et du palier à roulement de reprise des efforts transversaux.

De préférence, la bague externe du palier à roulement de reprise des efforts transversaux comprend une bride souple. Une telle souplesse dans la bague externe de ce palier à roulement présente l'avantage d'empêcher la propagation de vibrations dans le reste du système de calage de pas lors d'évènements en vol tels que des impacts sur les aubes de soufflante avec des éléments extérieurs.

Les éléments roulants du palier à roulement de reprise des efforts transversaux sont des aiguilles ou des rouleaux.

De préférence également, la bague interne du palier à roulement à billes de reprise des efforts centrifuges est réalisée en deux parties distinctes afin de faciliter le montage du pivot.

La bague interne du palier à roulement de reprise des efforts transversaux peut être frettée sur le pivot.

L'invention a également pour objet une aube à angle de calage variable pour moyeu de soufflante de turbomachine, comprenant un profil aérodynamique et un pivot tel que défini précédemment.

L'invention a aussi pour objet turbomachine comprenant au moins un moyeu de soufflante et au moins un ensemble d'aubes à angle de calage variable tel que défini précédemment.

L'invention a encore pour objet un procédé de montage dans un moyeu de soufflante d'un pivot tel que défini précédemment, comprenant successivement : la descente du pivot dans un moyeu de soufflante ; le serrage du palier à roulement à billes de reprise des efforts centrifuges par vissage de l'écrou de serrage sur le filetage externe du pivot ; le montage du palier à roulement de reprise des efforts transversaux sur l'extrémité radiale intérieure du pivot ; le montage de la bague de transmission de calage à l'intérieur de l'extrémité radiale intérieure du plot ; et le verrouillage de ladite bague de transmission de calage sur le plot.

### Brève description des dessins

[Fig. 1] La figure 1 est une vue en coupe montrant un pivot de pale à orientation réglable selon un mode de réalisation de l'invention.
[Fig. 2] La figure 2 est une vue en coupe montrant un pivot de pale à orientation réglable selon un autre mode de réalisation de l'invention.
[Fig. 3A-3F] Les figures 3A à 3F représentent un exemple de montage d'un pivot selon le mode de réalisation de la figure 1.

### Description des modes de réalisation

L'invention s'applique à toute turbomachine équipée d'au moins une soufflante carénée ou non carénée, et dont les aubes de soufflante (dans le cas d'une soufflante carénée) ou les pales d'hélice (dans le cas d'une soufflante non carénée) sont équipées d'un système de calage de pas.

L'invention s'applique en particulier aux turboréacteurs du type comprenant une soufflante à très fort taux de dilution (grand diamètre de soufflante) et à très faible rapport de pression.

L'architecture de ces types de turboréacteurs est bien connue de l'homme du métier et ne sera donc pas décrite ici en détails. Brièvement, ces turboréacteurs comprennent une soufflante carénée à grand diamètre qui est munie d'un système de changement de calage de pas des aubes de la soufflante.

Un tel système de changement de calage de pas peut par exemple comprendre des bras de levier (ou excentriques) couplés à chaque pivot d'aube et actionnés en pivotement par un vérin.

De façon plus précise, le pivot de chaque aube a pour fonction d'assurer la rétention de l'aube de soufflante sur un moyeu rotatif de soufflante et le guidage de celle-ci pour le calage de son pas.

A cet effet, le pivot de chaque aube de soufflante est monté radialement dans un orifice du moyeu de la soufflante qu'il traverse de part en part, le moyeu étant centré sur l'axe longitudinal du turboréacteur.

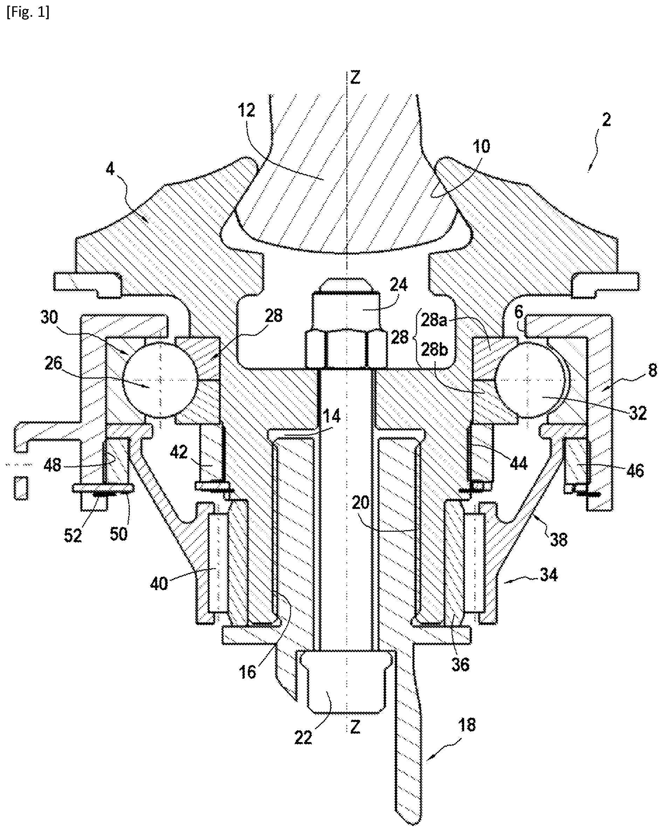

Comme représenté sur la figure 1, le pivot 2 de l'aube de soufflante selon l'invention comprend plusieurs éléments distincts qui sont assemblés entre eux de sorte à faciliter son montage/démontage du moyeu de l'hélice.

En particulier, le pivot 2 comprend un plot 4 qui s'étend selon l'axe radial Z-Z du pivot au travers d'un orifice 6 du moyeu 8 de la soufflante. Ce plot 4 présente, à une extrémité radiale extérieure (c'est-à-dire au niveau de son extrémité la plus éloignée de l'axe longitudinal du turboréacteur), une attache 10 en forme de bulbe qui est destinée à recevoir un pied 12 de l'aube de soufflante. Bien entendu, d'autres moyens de retenue du pied de l'aube pourraient être envisagés.

Au niveau de son extrémité radiale intérieure (c'est-à-dire au niveau de son extrémité la plus proche de l'axe longitudinal du turboréacteur), le plot 4 comprend un orifice 14 centré sur l'axe radial Z-Z et destiné à recevoir une bague de transmission de calage.

De plus, l'orifice 14 est muni de cannelures internes 16 de transmission d'un couple de torsion. Bien entendu, d'autres moyens d'accouplement pour la transmission du couple de torsion peuvent être envisagés.

Le pivot selon l'invention comprend également une bague de transmission de calage 18 (également appelée excentrique) qui est positionnée dans l'orifice 14 du plot et couplée à ce dernier par l'intermédiaire de cannelures 20 portés sur sa surface externe et coopérant avec les cannelures internes 16 de l'orifice.

Cette bague de transmission de calage 18 est destinée à transmettre le couple de torsion au pivot de l'aube pour changer son pas de calage. Elle est verrouillée sur le plot par l'intermédiaire d'une vis 22 centrée sur l'axe radial Z-Z et d'un écrou 24 serré sur ladite vis. La bague de transmission de calage permet également de verrouiller la bague interne du palier à roulement de reprise des efforts transversaux en appui contre la partie interne du plot.

Le pivot selon l'invention comprend encore des paliers à roulement pour la reprise des efforts centrifuges (c'est-à-dire selon l'axe radial Z-Z) et des efforts transversaux (c'est-à-dire selon un plan perpendiculaire à l'axe radial Z-Z) vus par l'aube et son pivot.

Plus précisément, le pivot selon l'invention comprend un palier à roulement à billes 26 qui est destiné à reprendre les efforts centrifuges. Ce palier à roulement à billes 26 est muni d'une bague interne 28 qui est montée en appui transversal contre l'extrémité radiale extérieure du plot 4.

De préférence, la bague interne 28 est formée de deux parties distinctes 28a, 28b. Cette caractéristique permet de faciliter le montage du pivot comme il sera détaillé ultérieurement.

Ce palier à roulement à billes 26 comprend également une bague externe 30 qui est montée en appui transversal à l'intérieur de l'orifice 6 du moyeu 8 de la soufflante, les bagues interne 28 et externe 30 définissant des pistes de roulement pour une pluralité de billes 32.

Pour reprendre les efforts transversaux, le pivot selon l'invention comprend un palier à roulement à aiguilles ou à rouleaux 34 qui est décalé radialement vers l'intérieur par rapport au palier à roulement à billes 26.

De façon plus précise, ce palier à roulement à aiguilles ou à rouleaux 34 comprend une bague interne 36 qui est montée en appui transversal contre l'extrémité radiale intérieure du plot 4. Cette bague interne 36 peut par exemple être frettée sur le plot.

Le palier à roulement à aiguilles ou à rouleaux 34 comprend également une bague externe 38 qui est montée en appui transversal à l'intérieur de l'orifice 6 du moyeu 8 de la soufflante, les bagues interne 36 et externe 38 définissant des pistes de roulement pour une pluralité d'aiguilles ou de rouleaux 40.

Un premier écrou de serrage 42 est vissé sur un filetage externe 44 du plot 4 pour assurer un serrage de la bague interne 28 du palier à roulement de reprise des efforts centrifuges 26 sur le plot.

Un second écrou de serrage 46 est vissé sur un filetage interne 48 du moyeu 8 pour assurer un serrage contre celui-ci des bagues externes 30, 38 respectives du palier à roulement de reprise des efforts centrifuges et du palier à roulement de reprise des efforts transversaux.

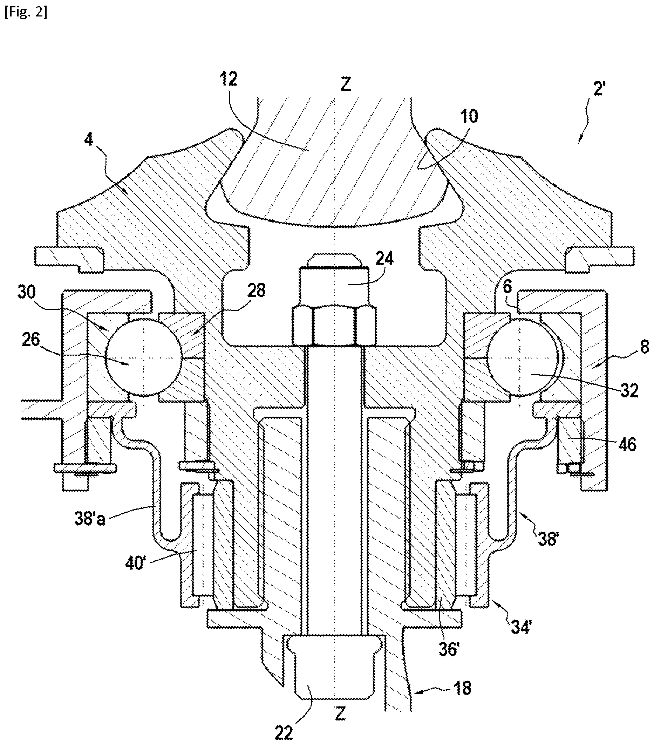

La figure 2 représente une variante de réalisation du pivot selon l'invention.

Cette variante se distingue du mode de réalisation précédemment décrit en ce que la bague externe 38' du palier à roulement à aiguilles ou à rouleaux 34' présente entre sa partie définissant les pistes de roulement et sa partie venant en appui transversal à l'intérieur de l'orifice 6 du moyeu 8 de la soufflante une bride souple 38'a.

Cette bride souple 38'a présente l'avantage de conférer à la bague externe 38' une souplesse lui permettant d'empêcher la propagation de vibrations dans le reste du système de calage de pas lors d'évènements en vol tels que des impacts sur les aubes de soufflante avec des éléments extérieurs. Elle peut être obtenue de plusieurs façons : en lui donnant des formes en créneaux, en diminuant son épaisseur entre ses deux extrémités ou en utilisant un matériau plus souple.

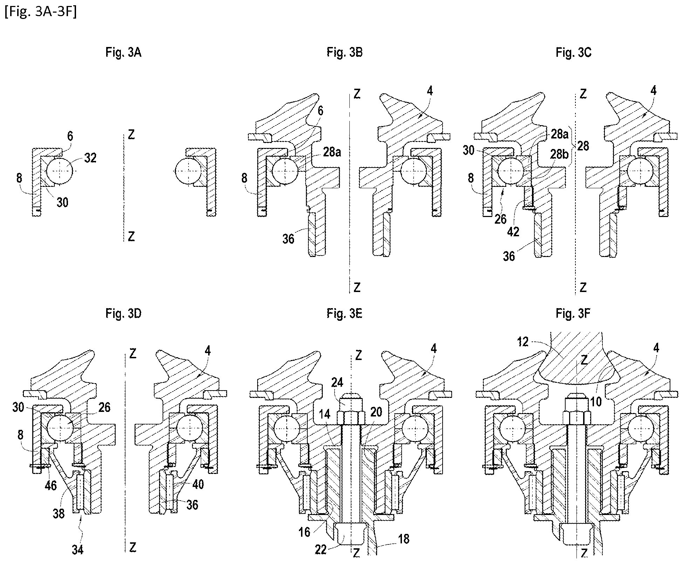

En liaison avec les figures 3A à 3F, on décrira maintenant un exemple de montage du pivot selon l'invention.

Au cours d'une première étape illustrée par la figure 1A, la bague externe 30 du palier à roulement à billes est montée en appui transversal à l'intérieur de l'orifice 6 du moyeu 8 de la soufflante (elle est par exemple frettée), puis les billes 32 de ce palier à roulement sont montées.

Comme représenté sur la figure 3B, le plot 4 est alors descendu radialement dans l'orifice 6 du moyeu 8, le plot étant préalablement prémuni d'une partie 28a de la bague interne du palier à roulement à billes et de la bague interne 36 du palier à roulement à aiguilles ou à rouleaux (ces bagues 28a, 36 étant par exemple frettées).

L'autre partie 28b de la bague interne du palier à roulement à billes 26 est ensuite montée pour former la bague interne 28, cette dernière étant maintenue par le serrage du premier écrou de verrouillage 42 (figure 3C).

Les aiguilles ou rouleaux 40, ainsi que la bague externe 38 du palier à roulement à aiguilles ou à rouleaux 34 sont ensuite montés. Les bagues externes 30, 38 respectives de paliers à roulement sont alors verrouillées par serrage du second écrou de verrouillage 46 (figure 3D).

Le second écrou de verrouillage 46 pourra lui-même être verrouillé en position à l'aide d'un anneau anti-rotation 50 et d'un anneau élastique de serrage 52 type « circlips » par exemple (voir la figure 1).

Au cours de l'étape suivante illustrée par la figure 3E, on vient monter la bague de transmission de calage 18 à l'intérieur de l'orifice 14 ménagé dans le plot 4 en faisant coopérer leurs cannelures respectives 16, 20. La bague de transmission de calage est alors verrouillée par montage de la vis 22 et serrage de l'écrou 24.

Enfin, comme représenté sur la figure 3F, le pied 12 de l'aube peut être monté dans l'attache 10 en forme de bulbe ménagé à l'extrémité radiale extérieure du plot 4.

## Revendications

1. Pivot (2 ; 2') d'aube à orientation réglable pour moyeu de soufflante de turbomachine, comprenant :
- un plot (4) ayant à une extrémité radiale extérieure des moyens de retenue (10) configurés pour retenir un pied d'aube (12) de soufflante et à une extrémité radiale intérieure des moyens d'accouplement (16) pour la transmission d'un couple de torsion ;
- un palier à roulement à billes de reprise des efforts centrifuges (26) ayant une bague interne (28) montée en appui transversal contre une partie radiale extérieure du plot ;
- un écrou de serrage (42) vissé sur un filetage externe (44) du plot pour assurer un serrage de la bague interne du palier à roulement à billes de reprise des efforts centrifuges sur le plot ;
- un palier à roulement de reprise des efforts transversaux (34 ; 34') ayant une bague interne (36 ; 36') montée en appui transversal contre une partie radiale intérieure du plot ;
les éléments roulants (40; 40') du palier à roulement de reprise des efforts transversaux (34; 34') étant des aiguilles ou des rouleaux;
- une bague de transmission de calage (18) positionnée à l'intérieur de l'extrémité radiale intérieure du plot et munie de moyens d'accouplement (20) coopérant avec les moyens d'accouplement (16) du plot ; et
- des moyens de verrouillage (22, 24) de la bague de transmission de calage sur le plot.

2. Pivot selon la revendication 1, dans lequel le palier à roulement de reprise des efforts transversaux (34 ; 34') comprend une bague externe (38 ; 38') configurée pour être montée en appui transversal à l'intérieur d'un moyeu (8) de soufflante, les bagues interne et externe définissant des pistes de roulement pour une pluralité d'éléments roulants (40 ; 40').

3. Pivot selon la revendication 2, dans lequel le palier à roulement à billes de reprise des efforts centrifuges (26) comprend une bague externe (30) destinée à être montée en appui transversal à l'intérieur du moyeu (8) de soufflante, les bagues interne et externe définissant des pistes de roulement pour une pluralité de billes (32).

4. Pivot selon la revendication 3, comprenant en outre un second écrou de serrage (46) configuré pour être vissé sur un filetage interne (48) du moyeu de soufflante pour assurer un serrage contre celui-ci des bagues externes (30, 38 ; 38') respectives du palier à roulement à billes de reprise des efforts centrifuges et du palier à roulement de reprise des efforts transversaux.

5. Pivot selon l'une quelconque des revendications 2 à 4, dans lequel la bague externe (38') du palier à roulement de reprise des efforts transversaux comprend une bride souple (38'a).

6. Pivot selon l'une quelconque des revendications 1 à 5, dans lequel la bague interne (28) du palier à roulement à billes de reprise des efforts centrifuges est réalisée en deux parties distinctes (28a, 28b) afin de faciliter le montage du pivot.

7. Pivot selon l'une quelconque des revendications 1 à 6, dans lequel la bague interne (36 ; 36') du palier à roulement de reprise des efforts transversaux est frettée sur le pivot (4).

8. Aube à angle de calage variable pour moyeu de soufflante de turbomachine, comprenant un profil aérodynamique et un pivot (2 ; 2') selon l'une quelconque des revendications 1 à 7.

9. Turbomachine comprenant au moins un moyeu (8) de soufflante et au moins un ensemble d'aubes à angle de calage variable selon la revendication 8.

10. Procédé de montage d'un pivot selon l'une quelconque des revendications 1 à 7 dans un moyeu (8) de soufflante, comprenant successivement : la descente du pivot (4) dans le moyeu (8) de soufflante ; le serrage du palier à roulement à billes de reprise des efforts centrifuges (26) par vissage de l'écrou de serrage (44) sur le filetage externe (44) du pivot ; le montage du palier à roulement de reprise des efforts transversaux (34 ; 34') sur l'extrémité radiale intérieure du pivot ; le montage de la bague de transmission de calage (18) à l'intérieur de l'extrémité radiale intérieure du plot ; et le verrouillage de ladite bague de transmission de calage sur le plot.

## Patentansprüche

1. Schaufelzapfen (2; 2') mit einstellbarer Ausrichtung für eine Nabe eines Turbomaschinengebläses, umfassend:
- einen Stift (4), der an einem radial äußeren Ende Haltemittel (10), die zum Halten eines Schaufelfußes (12) eines Gebläses konfiguriert sind, und an einem radial inneren Ende Kupplungsmittel (16) zur Übertragung eines Torsionsmoments aufweist;
- ein Kugellager zur Aufnahme von Zentrifugalkräften (26) mit einem Innenring (28), der in Querabstützung an einem radial äußeren Teil des Stifts anliegend angebracht ist;
- eine Spannmutter (42), die auf ein Außengewinde (44) des Stifts geschraubt ist, um den Innenring des Kugellagers zur Aufnahme von Zentrifugalkräften auf dem Stift zu spannen;
- ein Wälzlager zur Aufnahme von Querkräften (34; 34') mit einem Innenring (36; 36'), der in Querabstützung an einem radial inneren Teil des Stifts anliegend angebracht ist;
wobei die Wälzelemente (40, 40') des Wälzlagers zur Aufnahme von Querkräften (34, 34') Nadeln oder Rollen sind;
- einen Keilübertragungsring (18), der im Inneren des radial inneren Endes des Stifts positioniert ist und mit Kupplungsmitteln (20) versehen ist, die mit den Kupplungsmitteln (16) des Stifts zusammenwirken; und
- Mittel (22, 24) zum Verriegeln des Keilübertragungsrings auf dem Stift.

2. Zapfen nach Anspruch 1, wobei das Wälzlager zur Aufnahme von Querkräften (34; 34') einen Außenring (38; 38') umfasst, der ausgelegt ist, um in Querabstützung im Inneren einer Gebläsenabe (8) angebracht zu sein, wobei der Innen- und der Außenring Rollbahnen für eine Vielzahl von Wälzkörpern (40; 40') definieren.

3. Zapfen nach Anspruch 2, wobei das Kugellager zur Aufnahme von Zentrifugalkräften (26) einen Außenring (30) umfasst, der dazu bestimmt ist, im Inneren der Gebläsenabe (8) in Querabstützung angebracht zu sein, wobei der Innen- und der Außenring Rollbahnen für eine Vielzahl von Kugeln (32) definieren.

4. Zapfen nach Anspruch 3, ferner umfassend eine zweite Spannmutter (46), die ausgelegt ist, um auf ein Innengewinde (48) der Gebläsenabe geschraubt werden zu können, um die jeweiligen Außenringe (30, 38; 38') des Kugellagers zur Aufnahme von Zentrifugalkräften und des Wälzlagers zur Aufnahme von Querkräften darauf zu spannen.

5. Zapfen nach einem der Ansprüche 2 bis 4, wobei der Außenring (38') des Kugellagers zur Aufnahme von Zentrifugalkräften einen flexiblen Flansch (38'a) umfasst.

6. Zapfen nach einem der Ansprüche 1 bis 5, wobei der Innenring (28) des Kugellagers zur Aufnahme von Zentrifugalkräften aus zwei getrennten Teilen (28a, 28b) gefertigt ist, um die Montage des Zapfens zu erleichtern.

7. Zapfen nach einem der Ansprüche 1 bis 6, wobei der Innenring (36; 36') des Wälzlagers zur Aufnahme von Querkräften auf den Zapfen (4) aufgeschrumpft ist.

8. Schaufel mit variablem Keilwinkel für Gebläsenabe einer Turbomaschine, umfassend ein aerodynamisches Profil und einen Zapfen (2; 2') nach einem der Ansprüche 1 bis 7.

9. Turbomaschine mit mindestens einer Gebläsenabe (8) und mindestens einem Satz von Schaufeln mit verstellbarem Keilwinkel nach Anspruch 8.

10. Verfahren zur Montage eines Zapfens nach einem der Ansprüche 1 bis 7 in einer Gebläsenabe (8), das nacheinander umfasst: Absenken des Zapfens (4) in die Gebläsenabe (8); Spannen des Kugellagers zur Aufnahme von Zentrifugalkräften (26) durch Verschrauben der Spannmutter (44) auf dem Außengewinde (44) des Zapfens; Anbringen des Wälzlagers zur Aufnahme von Querkräften (34; 34') auf dem inneren radialen Ende des Zapfens; Anbringen des Keilübertragungsrings (18) im Inneren des inneren radialen Endes des Zapfens; und Verriegeln des Keilübertragungsrings auf dem Zapfen.

## Claims

1. A blade pivot (2; 2') of adjustable orientation for a turbomachine fan hub comprising:
- a block (4) having retaining means (10) at an outer radial end configured to retain a fan blade root (12) and coupling means (16) at an inner radial end, for the transmission of a torque;
- a ball type rolling bearing for taking up centrifugal forces (26) having an inner ring (28) mounted in transverse support against an outer radial portion of the block;
- a clamping nut (42) screwed onto an external thread (44) of the block in order to clamp the inner ring of the ball type rolling bearing for taking up centrifugal forces on the block;
- a rolling bearing for taking up transverse forces (34; 34') having an inner ring (36; 36') mounted in transverse support against an inner radial portion of the block; the rolling elements (40; 40') of the rolling bearing for taking up transverse forces (34; 34') being needles or rollers;
- a pitch setting transmission ring (18) positioned inside the inner radial end of the block and equipped with coupling means (20) cooperating with the coupling means (16) of the block; and
- means (22, 24) for locking the pitch setting transmission ring on the block.

2. The pivot according to claim 1, wherein the rolling bearing for taking up the transverse forces (34; 34') comprises an outer ring (38; 38') configured to be mounted in transverse support inside a fan hub (8), the inner and outer rings defining the rolling paths for a plurality of rolling elements (40; 40⁷).

3. The pivot according to claim 2, wherein the ball type rolling bearing for taking up centrifugal forces (26) comprises an outer ring (30) intended to be mounted in transverse support inside the fan hub (8), the inner and outer rings defining the rolling paths for a plurality of balls (32).

4. The pivot according to claim 3, also comprising a second clamping nut (46) configured to be screwed onto an internal thread (48) of the fan hub in order to clamp against it the respective outer rings (30, 38; 38') of the ball type rolling bearing for taking up centrifugal forces and of the rolling bearing for taking up transverse forces.

5. The pivot according to any one of claims 2 to 4, wherein the outer ring (38') of the rolling bearing for taking up transverse forces comprises a flexible flange (38'a).

6. The pivot according to any one of claims 1 to 5, wherein the outer ring (28) of the ball type rolling bearing for taking up centrifugal forces is produced in two distinct portions (28a, 28b) in order to facilitate the assembly of the pivot.

7. The pivot according to any one of claims 1 to 6, wherein the inner ring (36; 36') of the rolling bearing for taking up transverse forces is shrink-fit to the pivot (4).

8. A blade with variable a pitch setting angle for a turbomachine fan hub comprising an aerodynamic profile and a pivot (2; 2') according to any one of claims 1 to 7.

9. A turbomachine comprising at least one fan hub (8) and at least one assembly of blades with a variable pitch setting angle according to claim 8.

10. A method for assembling a pivot according to any one of claims 1 to 7 in a fan hub (8), comprising in succession: lowering the pivot (4) into the fan hub (8); clamping the ball type rolling bearing for taking up centrifugal forces (26) by screwing the clamping nut (44) onto the external thread (44) of the pivot; mounting the rolling bearing for taking up transverse forces (34; 34') on the inner radial end of the pivot; mounting the pitch setting transmission ring (18) inside the inner radial end of the block; and the locking of said pitch setting transmission ring on the block.
